# EUROPEAN PATENT SPECIFICATION

(11) **EP 0 614 716 B1**
(45) Date of publication and mention of the grant of the patent: **08.01.1997**
(21) Application number: 94100945.8
(22) Date of filing: 24.01.1994
(51) Int. Cl.: B23B 31/40

(54) **Mandrel for processing workpiece with internal spline**
Spannfutter zur Bearbeitung von gerillten Werkstücken
Mandrin pour l'usinage de pièces comportant des cannelures

(30) Priority: 08.02.1993 CN 93227250
(43) Date of publication of application: 14.09.1994
(73) Proprietor: Xu, Xian Hua, Shenyang City (CN)
(72) Inventor: Xu, Xian Hua, Shenyang City (CN)
(74) Representative: Goddar, Heinz J., Dr.

(56) References cited:
- DE-C- 1 047 664
- US-A- 2 960 342
- US-A- 3 100 117
- US-A- 3 782 740

## Description

The invention relates to parts of machine tools, especially to a mandrel for processing workpieces with internal spline.

The general technology, such as disclosed in Chinese patent application 88 216 959.1, uses a mandrel which is fixed to a rotary working table by a lower conical handle to clamp the workpiece by means of an elastic clack clip. However, this device cannot reach high positioning precision, because only the upper section of a clack clip contacts with the workpiece. Also it is a troublesome pre-positioning work with low efficiency to fix the lower section by a conical handle without a positioning unit.

The document US-A 2,960,342, which corresponds to the pre-characterizing part of claim 1, discloses a device for holding a gear blank in the manufacture of precision gears with expandable spline. The gear blank has spline teeth broached in the bore thereof, and the expandable spline comprises a hub, teeth on the outer periphery of said hub mating with the spline teeth in the gear blank, a plurality of alternate slots in said hub extending from each end approximately two-thirds the length of said hub, a tapered arbor received in said bore, a pin extending from said arbor engaged in a slot in said hub, and nuts on the respective ends of said arbor of expanding said hub and locking said gear, spline hub and arbor in fixed relation to each other whereby all faces of said gear are exposed for machining.

The mandrel according to the invention has been engineered for processing a workpiece with an internal spline to position it with high precision and efficiency. To achieve this, two half-keys separated by a lever are installed in a lower groove of a cylindrical and elastic clack clip. Said lever has a conical head at its lower end within the cylinder, and an expanding sleeve, a spring, first steel balls, a second sleeve, second steel balls, an upper sleeve, and third stellballs and a nut are assemblied in order. At least one passing groove exist between two keys in the spline of said cylindrical and elastic clack clip.

A detailed explanation will be given in connection with the drawing, wherein
Figure 1 is a sectional view of a preferred embodiment of a mandrel according to the invention;
Figure 2 is a view in direction of the arrow "A" of figure 1;
Figure 3 is a vertical view to the mandrel of figure 1;
Figure 4 is an outline drawing of the mandrel of figure 1; and
Figure 5 is a section taken on line B-B of figure 3.

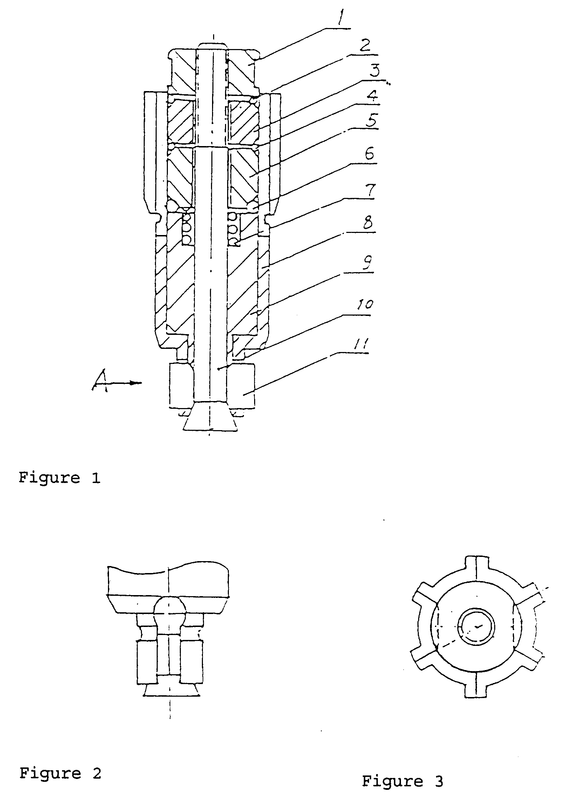

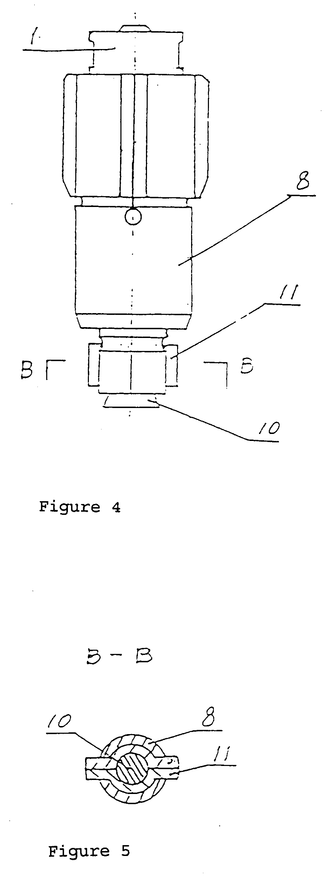

Referring to figures 1 to 5, two half-keys 11 are installed in a lower and open groove of a cylindrical and elastic clack clip 8. A lever 10 with a threaded upper end and a conical head at the lower end is accommodated inside the elastic clack clip 8. An expanding sleeve 9, a spring 7, steel balls 6, a sleeve 5, and steel balls 4, are assemblied in order in said elastic clack clip 8, wherein said expanding sleeve 9 is arranged at a part of said elastic clack clip 8 adjacent to said lower groove. A nut 1 is screwed onto the threaded upper end of lever 10. The outer face of the elastic clack clip 8 in its upper section is processed to form a spline shape, and at least one passing groove exist between two opposite keys. The expanding sleeve 9 has a conical face in the lower section. Both outer circles of upper sleeve 3 and sleeve 5 have chamfers. Steel balls 2, 4 and 6 are separately placed into grooves formed by said nut 1, chamfers at the upper sleeve 3 and the outer face chamfer of the sleeve 5.

In operation, half-keys 11 are put into the central bore of a rotary table and a processing workpiece is placed into the upper section of elastic clack clip 8. Rotating nut 1 makes the mandrel accurately fixed on the rotary table by steel balls 2, 4 and 6, the upper sleeve 3, sleeve 5, expanding sleeve 9 and the conical head of lever 10 to force the half-keys 11 to open together. With the nut rotating continuously, the chamfers of upper sleeve 3 and sleeve 5 push steel balls 2, 4 and 6 to force the elastic clack clip 8 open for fixing the workpiece. Rotating nut 1 in reverse direction releases elastic clack clip 8 and half-keys 11 and workpiece and mandrel may be taken off.

It is possible to fix and take off a workpiece in short time and with high precision by using the new mandrel according to the invention. A high efficiency of production can be achieved in processing a workpiece with internal spline.

## Claims

1. A mandrel for processing workpieces with internal spline, comprising an elastic clack clip (8), characterized in that two half-keys (11) separated by a lever (10) are installed in a lower groove of said elastic clack clip (8) having cylindrical shape, said lever (10) having a conical head at its lower end within the cylinder, and an expanding sleeve (9), a spring (7), first steel balls (6), a sleeve (5), second steel balls (4), an upper sleeve (3), third steel balls (2) and a nut (1) are assemblied in order on said lever (10), said expanding sleeve (9) being arranged adjacent to said lower groove.

2. The mandrel as claimed in claim 1, characterized in that at least one passing groove exists between said two opposite half-keys (11) in said clip (8).

3. The mandrel as claimed in claim 1, characterized in that said lever (10) is provided with a threaded upper end opposite to said conical head.

## Patentansprüche

1. Spannfutter zum Bearbeiten von Werkstücken mit innerer Keilverzahnung, mit einer elastischen Klappenklemme (clack clip) (8), dadurch gekennzeichnet, daß zwei halbe Keile (11), die durch einen Hebel (10) voneinander getrennt sind, in einer unteren Nut der elastischen Klappenklemme (8) mit zylindrischer Form angebracht sind, wobei der Hebel (10) einen konischen Kopf an seinem unteren Endabschnitt innerhalb des Zylinders aufweist, wobei eine sich erweiternde Hülse (9), eine Feder (7), erste Stahlkugeln (6), eine Hülse (5), zweite Stahlkugeln (4), eine obere Hülse (3), dritte Stahlkugeln (2) und eine Gewindemutter (1) in dieser Reihenfolge auf dem Hebel (10) angebracht sind, und wobei die sich erweiternde Hülse (9) benachbart zu der unteren Nut angeordnet ist.

2. Spannfutter nach Anspruch 1, dadurch gekennzeichnet, daß wenigstens eine Übergangsfuge zwischen den beiden einander gegenüberstehenden halben Keilen (11) in der Klemme (8) vorhanden ist.

3. Spannfutter nach Anspruch 1, dadurch gekennzeichnet, daß der Hebel (10), gegenüberstehend dem konischen Kopf, einen mit Gewinde versehenen oberen Endabschnitt aufweist.

## Revendications

1. Mandrin à languette interne pour le traitement de pièces travaillées, comprenant une bague de serrage élastique (8), caractérisé par le fait que deux demiclavettes (11) séparées par un levier (10) sont installées dans une rainure inférieure de ladite bague de serrage élastique (8) de forme cylindrique, ledit levier (10) ayant une tête conique monobloc à son extrémité inférieure, et qu'un manchon extensible (9), un ressort (7), des premières billes en acier (6), un manchon (5), des deuxièmes billes en acier (4), un manchon supérieur (3), des troisièmes billes en acier (2) et un écrou (1) sont assemblés dans l'ordre sur ledit levier (10), ledit manchon extensible (9) étant disposé adjacent à ladite rainure inférieure.

2. Mandrin selon la revendication 1, caractérisé par le fait qu'il existe au moins une rainure de passage entre lesdites deux demi-clavettes opposées (11) dans ladite bague (8).

3. Mandrin selon la revendication 1, caractérisé par le fait que ledit levier (10) est muni d'une extrémité supérieure filetée opposée à ladite tête conique.
